# EUROPEAN PATENT APPLICATION

(11) **EP 1 638 040 A1**
(43) Date of publication of application: **22.03.2006**
(21) Application number: 04022425.5
(22) Date of filing: 21.09.2004
(51) Int. Cl.: G06K 19/077, H01L 21/00

(54) **Method of building electronic label for electronic device**

(71) Applicant: TOPSEED TECHNOLOGY CORP., Chung Ho City, Taipei Hsien, Taiwan 235 (TW)
(72) Inventor: Chen, Shoei-Lai, Taipei 237 (TW)
(74) Representative: TER MEER - STEINMEISTER & PARTNER GbR

(57) **Abstract**

A method for building an electronic label within an electronic device, which packs and incorporates the electronic label into the electronic device, protects the electronic label from separation or damage caused by external force, and thereby facilitates the sale management or manufacture management of various electronic devices. The method includes preparing a chip area and a recognition area on a base body of an electronic device, orienting a IC chip and a transponder onto the base body, translating the relevant information of the electronic device into digital codes, burning the digital codes into the IC chip, wiring, and packing. Compared to the conventional arts which glue, one by one, a Radio Frequency Identification (RFID) tag onto an electronic device, the manufacturing procedure is greatly simplified. The assembling cost and time are thereby reduced in a large scale.

## Description

### BACKGROUND OF THE INVENTION

The present invention relates in general to a method for building an electronic label within an electronic device, and more particularly, to a method which packs and incorporates the electronic label into the electronic device, and thereby protects the electronic label from separation or damage caused by external force.

To manufacture or sell a product, a product label is utilized to record the relevant merchandise information about the product. The relevant merchandise data includes the manufacturer's name, product name, manufacture date, product specifications, corresponding device's specifications, batch number, and other recognition data created by manufacturers for management Especially, some electronic devices, such as integrated circuit (IC) elements, are so similar and small that a worker is unable to tell their difference. Accordingly, merchandise recognition labels are necessary to be utilized in sale management, storage management, and service management of electronic devices.

A conventional merchandise recognition label system prints a chattel label on self-adhesive paper for further gluing, one by one, onto the surface of the product. Limited by the small area of a label, the merchandise information of an average chattel is unable to be recorded or shown thoroughly. In addition, most IC elements have a small volume and are, therefore, unable to provide enough space for the placement of a small paper label. Furthermore, paper labels have many drawbacks. Paper labels are easy to remove for counterfeiting. The merchandise information printed on the labels is also likely to be erased or to become vague due to a damp climate, raining, or rubbing. This loss of the merchandise information makes it troublesome for businesses to proceed with the manufacturing or sale of the product. Further, accompanying the constant improvement and development of electronic technology, a Radio Frequency Identification (RFID) System has been provided to facilitate the management of various chattels. The RFID system includes a transceiver and a RFID tag. The RFID tag includes an IC chip and a resonance circuit which is constituted by an antenna and one or more capacitors. The transceiver emits radio signals to activate the RFID tag and acquires the merchandise information from the RFID tag. This RFID system is able to quickly provide a large amount of product information for recognition, management, and tracking. However, the current conventional utilization of the RFID system is to directly stick the RFID tag onto a surface of the product. This method is unable to protect the RFID tag from fracture, separation, or other damage. It is also unable to prevent the electronic device from being counterfeited.

### BRIEF SUMMARY OF THE INVENTION

The present invention provides a method for building an electronic label within an electronic device. This method packs and incorporates the electronic label into the electronic device, and thereby protects the electronic label from separation or damage caused by external force.

The method for building an electronic label within an electronic device provided by the present invention includes preparing a chip area and a recognition area on a base body of an electronic device, orienting an IC chip at the chip area, orienting a transponder at the recognition area, translating the relevant information of the electronic device into digital codes, burning the digital codes into the IC chip, wiring, packing, and finishing an electronic device which encloses the IC chip and the transponder. Compared to the conventional arts which glue, one by one, a RFID tag onto an electronic device, the manufacturing procedure of the present invention is greatly simplified. The assembling cost and time are thereby reduced in a large scale. Further, because the electronic label is enclosed inside the electronic device, it is protected from damage or separation due to external force.

These and other objectives of the present invention will become obvious to those of ordinary skill in the art after reading the following detailed description of

### preferred embodiments.

It is to be understood that both the foregoing general description and the following detailed description are exemplary, and are intended to provide further explanation of the invention as claimed.

### BRIEF DESCRIPTION OF THE DRAWINGS

These as well as other features of the present invention will become more apparent upon reference to the drawings therein:
Figure 1 is a flow chart of a method for building an electronic label within an electronic device of the present invention.
Figure 2 is a schematic perspective view of an electronic device which utilizes the present invention to enclose an electronic label.

### DETAILED DESCRIPTION OF THE INVENTION

Reference will now be made in detail to the preferred embodiments of the present invention, examples of which are illustrated in the accompanying drawings. Wherever possible, the same reference numbers are used in the drawings and the description to refer to the same or like parts.

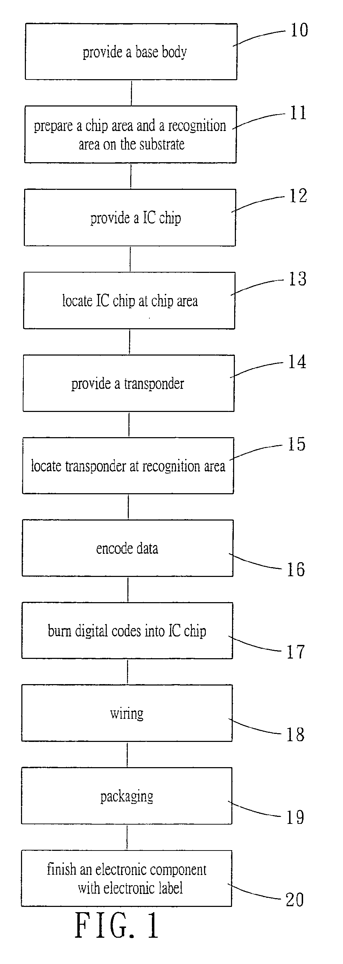

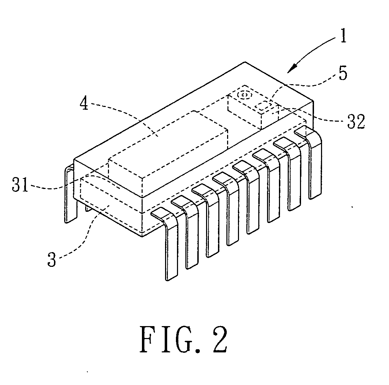

Referring to figure 1 and figure 2, a flow chart of a method for building an electronic label within an electronic device of the present invention and a schematic perspective view of an electronic device utilizing the present invention are shown respectively. The present invention is utilized to produce an electronic device 1 which encloses an electronic label as a finished product of a RFID tag, including an IC chip 4 and transponder 5, for the recognition, management, and tracking of the electronic device 1. The method of the present invention includes at least the following steps:
(Step 10) A base body 3 of an electronic device 1 is provided as the foundation for the building of the electronic label. In an embodiment of the present invention, the base body 3 has an IC circuit incorporated within it to perform the desired function of the electronic device 1.
(Step 11) A chip area 31 and a recognition area 32 are selected on the base body 3. The construction sites of the chip area 31 and the recognition area 32 can be located at any suitable position on one surface of the base body 3, for example, the disposition shown in figure 2. The orientation of the chip area 31 and the recognition area 32 can be freely designed to attain a suitable arrangement.
(Step 12) The IC chip 4 is acquired for installation onto the base body 3.
(Step 13) The IC chip 4 is directly embedded into or secured onto the chip area 31 of the base body 3, and thereby oriented at the chip area 31.
(Step 14) The transponder 5 is acquired for installation onto the base body 3. The transponder 5 includes an antenna and one or more capacitors for constituting a resonance circuit which electrically connects to the IC chip 4.
(Step 15) The transponder 5 is directly embedded into or secured onto the recognition area 32 of the base body 3, and thereby oriented at the recognition area 32.
(Step 16) The relevant merchandise information of the electronic device 1 is translated into digital codes. The relevant merchandise information of the electronic device 1 includes, for example, the manufacturer's name, the product's name, the manufacturing date, product specifications, corresponding device's specifications, the batch number, and other recognition data created by manufacturers for management.
(Step 17) The digital codes acquired in step 16 are further burned into the IC chip 4 for storage.
(Step 18) The IC chip 4 is electrically connected to the transponder 5 through a wiring procedure.
(Step 19) A packing procedure is applied to the electronic device 1. The IC chip 4 oriented at the chip area 31 and the transponder 5 oriented at the recognition area 32 are incorporated into the electronic device 1 through the packing procedure.
(Step 20) An electronic device 1 which encloses the IC chip 4 and the transponder 5 to constitute the electronic label is thereby finished.

By sequentially carrying out the aforementioned procedure of the method for building an electronic label within an electronic device of the present invention, the transponder 5 and the IC chip 4 are capable of being packed and incorporated into the electronic device 1 at one surface of the base body 3 of the electronic device 1, as illustrated in figure 2. Compared to the conventional arts which glue, one by one, a RFID tag onto an electronic device, the manufacturing procedure of the present invention is greatly simplified. The assembling cost and time are thereby reduced in a large scale. Furthermore, because the electronic label is enclosed inside the electronic device 1, it is protected from damage or separation due to external force.

In addition, the antenna of the transponder 5 electrically connects to one pin of the IC chip 4. The electronic device 1 is thereby able to transmit its relevant merchandise information, which is stored in the IC chip 4, through radio signals.

While an illustrative and presently preferred embodiment of the invention has been described in detail herein, it is to be understood that the inventive concepts may be otherwise variously embodied and employed and that the appended claims are intended to be construed to include such variations except insofar as limited by the prior art.

## Claims

1. A method of building an electronic label for an electronic device, comprising the steps of:
providing a substrate;
preparing a chip area and a recognition area on the substrate;
orienting a integrated circuit (IC) chip at the chip area;
orienting a transponder at the recognition area;
translating relevant merchandise information of the electronic device into digital codes;
burning the digital codes into the IC chip for storage;
electrically connecting the IC chip to the transponder through a wiring procedure; and
performing a packaging procedure to enclose the IC chip and the transponder together to finish an electronic component.

2. The method of Claim 1, wherein the transponder includes a resonance circuit electrically connected to the IC chip, and the resonance circuit includes an antenna and one or more capacitors.

3. The method of Claim 2, wherein the antenna electrically connects to one pin of the IC chip.

4. The method of Claim 1, wherein the translation step includes encoding manufacturer's names, product names, manufacture date, product specifications, batch number, or recognition data created by manufacturers for management into the digital codes.

5. A method of building an electronic label for an electronic device, comprising the steps of:
providing a substrate;
orienting an integrated circuit (IC) chip on the substrate;
orienting a transponder on the substrate;
translating relevant merchandise information of the electronic device into digital codes;
burning the digital codes into the IC chip for storage;
electrically connecting the IC chip to the transponder through a wiring procedure; and
performing a packaging procedure to enclose the IC chip and the transponder together to finish an electronic component.

6. The method of Claim 5, wherein the IC chip and the transponder are assembled onto one surface of the substrate.

7. The method of Claim 5, wherein the IC chip and the transponder are assembled adjacent to each other onto one surface of the substrate.

8. The method of Claim 5, wherein the transponder includes a resonance circuit electrically connected to the IC chip, and the resonance circuit includes an antenna and one or more capacitors.

9. The method of Claim 8, wherein the antenna of the transponder electrically connects to one pin of the IC chip.

10. The method of Claim 5, wherein the translation step includes encoding manufacturer's names, product names, manufacture date, product specifications, batch number, or recognition data created by manufacturers for management into the digital codes.
